# EUROPEAN PATENT APPLICATION

(11) **EP 1 900 771 A1**
(43) Date of publication of application: **19.03.2008**
(21) Application number: 06757042.4
(22) Date of filing: 06.06.2006
(51) Int. Cl.: C08L 23/22, C03C 27/12, C08K 3/00, C08L 53/02, C09K 3/10

(54) **RESIN COMPOSITION**

(30) Priority: 07.06.2005 JP 2005166601
(71) Applicant: Kaneka Corporation, Kita-ku Osaka-shi, Osaka 530-8288 (JP)
(72) Inventor: YAO, Takeshi, KANEKA CORPORATION, Settsu-shi, Osaka 566-0072 (JP); NAKASHIMA, Tohru, KANEKA CORPORATION, Settsu-shi, Osaka 566-0072 (JP)
(74) Representative: Vossius & Partner
(86) International application number: PCT/JP2006/311302
(87) International publication number: WO 2006/132230

(57) **Abstract**

The present invention has its object to provide a resin composition excellent in gas barrier properties, mechanical strength and elasticity and further showing only a slight extent of gravity deformation under high temperature conditions. The invention relates to a resin composition which comprises an isobutylene-based polymer (A), an isobutylene-based block copolymer (B) comprising a polymer block (b1) the constituent monomer(s) of which is (are) an aromatic vinyl compound(s) and a polymer block (b2) the constituent monomer (s) of which is (are) isobutylene, and a filler (C). This composition can be used as a sealant, in particular as a hot melt sealant for double glazing units, and as a hot melt spacer material for double glazing units.

## Description

### TECHNICAL FIELD

The present invention relates to a resin composition excellent in gas barrier properties, mechanical strength and elasticity and further showing low gravity deformability even under high temperature conditions. The invention further relates to a sealant, in particular a hot melt sealant for a double glazing unit or a hot melt spacer for a double glazing unit, each comprising the resin composition.

### BACKGROUND ART

Sealants are widely used in automobiles and building materials as materials to seal joints to secure watertightness and/or airtightness. Sealants are required to provide high levels of airtightness and, in many cases, are required to have such characteristics as high elasticity and high mechanical strength, although the requirements may vary according to the intended use thereof.

Another example among the uses of sealants for building materials is the use thereof in double glazing units. The double glazing unit generally comprises two or more glass panels, with a spacer inserted between two neighboring panels to maintain a given distance between them. In double glazing units, a sealant is applied, for example, between the spacer and each glass panel, and the space between the glass panels is filled with such a gas as dry air, nitrogen, argon or sulfur hexafluoride, whereby such effects as thermal insulation, sound insulation and water condensation prevention, among others.

Double glazing units are variegated in structure and, according to the structure thereof, various sealants are applied in various ways. As such sealants, mention may be made of hot melt adhesives, for instance. In some cases, hot melt spacers are used as the spacers. Known as examples of the double glazing unit in which a hot melt material is used are double glazing units in which the spacer used is a material comprising a thermoplastic resin such as a vinyl chloride resin or an isobutylene polymer-based hot melt butyl with a desiccant incorporated therein (Patent Document 1).

The above-mentioned isobutylene polymer-based hot melt butyl has such characteristics as gas barrier properties ensuring airtightness and watertightness, weather resistance and tackiness and therefore used frequently as a sealant for double glazing units. More specifically, in double glazing units having a structure in which an aluminum spacer containing a desiccant therein is used, the hot melt butyl is used, by the hot melt technique, as a primary sealant for mutually fixing the aluminum spacer and the glass panels or applied, by the hot melt technique, as a secondary sealant to the outside of the aluminum spacer, for instance. In a recent example, a material prepared by incorporating a desiccant in the hot melt butyl is applied as such, by the hot melt technique, to one end of a double glazing unit for use as a thermoplastic resin spacer. In each constitution, the role to be fulfilled by the hot melt butyl is in maintaining the airtightness resulting from the adhesion thereof to the glass panel. Under certain environmental conditions, however, the hot melt butyl may be destructed, deformed or peeled off during a long period of use, with the result that the performance thereof may no longer be maintained and the airtightness may be lost in some cases. Further, problems are sometimes produced by deformations caused by the force of gravity (gravity deformations) under high temperature conditions and insufficiencies of elasticity and mechanical strength, in particular.

On the other hand, a known method for improving the thermal stability of hot melt butyl under high temperature conditions comprises adding a styrenic thermoplastic elastomer or thermoplastic resin (Patent Document 2). However, the use of such a styrenic thermoplastic elastomer or thermoplastic resin, which is not an isobutylene-based one, may produce a problem, namely may reduce the gas barrier ability depending on the level of addition thereof. Thus, a material having both high elasticity and high mechanical strength while maintaining high gas barrier properties has been demanded.
Patent Document 1: Japanese Kokai Publication Hei07-17748
Patent Document 2: United States Patent Application Publication 2003/0195287

### SUMMARY OF THE INVENTION

It is an object of the present invention to provide a resin composition which can be used as a sealant, in particular a hot melt sealant for double glazing units, and as a hot melt spacer material for double glazing units and which is excellent in gas barrier properties, mechanical strength and elasticity and scarcely undergoes gravity deformations under high temperature conditions.

As a result of intensive investigations made by them, the present inventors have now completed the present invention.

Thus, the invention relates to
a resin composition
which comprises
an isobutylene-based polymer (A),
an isobutylene-based block copolymer (B) comprising a polymer block (b1) the constituent monomer (s) of which is (are) an aromatic vinyl compound(s) and a polymer block (b2) the constituent monomer(s) of which is(are) isobutylene, and
a filler (C).

In a preferred embodiment, the isobutylene-based block copolymer (B) has a number average molecular weight of 30,000 to 300,000.

In a preferred embodiment, the weight ratio (b2)/(b1) between the polymer block (b2) and polymer block (b1) in the isobutylene-based block copolymer (B) is 95/5 to 50/50.

In a preferred embodiment, the isobutylene-based block copolymer (B) is a styrene-isobutylene block copolymer.

In a further preferred embodiment, the isobutylene-based block copolymer (B) is a styrene-isobutylene-styrene triblock copolymer.

In a furthermore preferred embodiment, the above-mentioned filler (C) is at least one species selected from the group consisting of calcium carbonate and carbon black.

Preferably, the above resin composition further comprises a moisture-absorbing compound (D).

The moisture-absorbing compound (D) is preferably at least one species selected from the group consisting of silica gel, alumina and zeolite.

Preferably, the above resin composition further comprises a styrenic thermoplastic elastomer other than the component (B).

The invention further relates to
a sealant
which comprises the resin composition mentioned above.
Further, the invention relates to
a hot melt sealant for double glazing units
which comprises the resin composition mentioned above.
Furthermore, the invention relates to
a hot melt spacer for double glazing units
which comprises the resin composition mentioned above.

### DETAILED DESCRIPTION OF THE INVENTION

In the following, the invention is described in further detail.

The resin composition according to the invention comprises an isobutylene-based polymer (A), an isobutylene-based block copolymer (B) comprising a polymer block (b1) the constituent monomer(s) of which is(are)an aromatic vinyl compound and a polymer block (b2) the constituent monomer(s) of which is(are) isobutylene, and a filler (C).

In the composition according to the invention, the isobutylene-based polymer (A) provides hot melt adhesive characteristics. The isobutylene-based block polymer (B) characteristically has high gas barrier properties owing to the occurrence of an isobutylene block, and rigidity owing to the occurrence of an aromatic vinyl compound-derived block and, as compared with the use of other thermoplastic elastomers, the use thereof is advantageous not only in that the watertightness and airtightness of the composition will not be impaired but also in that the composition will undergo only a slight extent of gravity deformation under high temperature conditions. Furthermore, the filler (C) provides rigidity.

The isobutylene-based polymer (A) includes many commercial products generally marketed under the name polyisobutylene, polybutene or butyl rubber, for instance. As specific examples, there may be mentioned Exxon's Vistanex (LM-MS, MH, H or MML-80, 100, 120, 140, etc.), Nippon Oil Corporation' s Tetrax (3T, 4T, 5T, 6T, etc.) and Polybutene (HV), Himol (4H, 5H, 6H, etc.), BASF's Oppanol (B10, B12, B15, B50, B80, B100, B120, B150, B220, etc.) and Exxon's Butyl (007, 065, 068, 168, 268, 269, 365), among others.

The isobutylene-based polymer (A) preferably contains isobutylene-derived constituent units in an amount of not smaller than 50 parts by weight, more preferably not smaller than 80 parts by weight, still more preferably not smaller than 90 parts by weight, per 100 parts by weight of the polymer, although such ranges have no particular restrictive meaning.

The monomer other than isobutylene which may be contained in the isobutylene-based polymer (A) is not particularly restricted but may be any of those cationically polymerizable monomer components such as aromatic vinyl compounds, aliphatic olefins, alicyclic alkenes, dienes, vinyl ethers and β-pinene. These may be used singly or two or more of them may be used in combination.

As the aromatic vinyl compounds, there may be mentioned, among others, styrene, o-, m- or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m-, or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m-, or p-t-butylstyrene, o-, m-, or p-methoxystyrene, o-, m-, or p-chloromethylstyrene, o-, m-, or p-bromomethylstyrene, silyl-substituted styrene derivatives, indene, vinyl naphthalene and the like. These may be used singly or two or more of them may be used in combination.

As the aliphatic olefins, there may be mentioned ethylene, propylene, 1-butene, 2-methyl-1-butene, 3-methyl-1-butene, pentene, hexene, 4-methyl-1-pentene and octene, among others. As the alicyclic alkenes, there may be mentioned cyclohexene, vinylcyclohexane and norbornene, among others. These may be used singly or two or more of them may be used in combination.

As the diene compounds, there may be mentioned, among others, butadiene, isoprene, hexadiene, cyclopentadiene, cyclohexadiene, dicyclopentadiene, divinylbenzene, ethylidenenorbornene and the like. These may be used singly or two or more of them may be used in combination.

As the vinyl ethers, there may be mentioned methyl vinyl ether, ethyl vinyl ether, (n- or iso-)propyl vinyl ether, (n-, sec-, tert- or iso-)butyl vinyl ether, methyl propenyl ether and ethyl propenyl ether, among others. These may be used singly or two or more of them may be used in combination.

The number average molecular weight of the isobutylene-based polymer (A) is not particularly restricted but preferably is 1,000 to 300,000, in particular 10,000 to 100,000.

The number average molecular weight, so referred to herein, of each polymer is the value determined on the polystyrene equivalent basis by gel permeation chromatography (GPC) using, for example, a Waters GPC system (column: Showa Denko's Shodex K-804 (polystyrene gel), mobile phase: chloroform).

The aromatic vinyl compound(s) constituting the polymer block (b1) in the isobutylene-based block copolymer (B) is (are) not particularly restricted but includes or include those compounds enumerated hereinabove referring to the aromatic vinyl compounds.

The polymer block (b1) the constituent monomer(s) of which is(are) an aromatic vinyl compound(s) may or may not contain units derived from another monomer or other monomers different from the aromatic vinyl compound(s). When the block (b1) contains some other monomer (s) different from the aromatic vinyl compound(s), the aromatic vinyl compound-derived monomer units in the whole polymer block (b1) preferably amounts to at least 60% by weight, more preferably at least 80% by weight. When the aromatic vinyl compound-derived monomer unit content in the whole polymer block (b1) is lower than 60% by weight, the cohesive force of the polymer block will unfavorably become reduced. The monomer(s) other than the aromatic vinyl compound(s) is (are) not particularly restricted but may be any monomer cationically copolymerized with the aromatic vinyl compound(s) but includes, for example, isobutylene, the above-mentioned aliphatic olefins, alicyclic alkenes, dienes, vinyl ethers and β-pinene and like monomers. These may be used singly or two or more of them may be used in combination.

The polymer block (b2) the constituent monomer(s) of which is(are) isobutylene may or may not contain one or more other monomers than isobutylene. When the block (b2) contains a monomer(s) other than isobutylene, the proportion of the isobutylene in the whole polymer block (b2) is preferably not lower than 60% by weight, more preferably not lower than 80% by weight, from the viewpoint of gas barrier properties. The monomer(s) other than isobutylene is(are) not particularly restricted but may be any monomer cationically copolymerized with the isobutylene but includes, for example, the above-mentioned aromatic vinyl compounds, aliphatic olefins, alicyclic alkenes, dienes, vinyl ethers and β-pinene and like monomers. These may be used singly or two or more of them may be used in combination.

The weight ratio between the polymer block (b2) the constituent monomer(s) of which is(are) isobutylene and the polymer block (b1) the constituent monomer(s) of which is (are) an aromatic vinyl compound(s) in the isobutylene-based block copolymer (B) is not particularly restricted but the ratio (b2)/(b1) is preferably 95/5 to 50/50, more preferably 95/5 to 60/40. In particular, from the viewpoint of the gravity deformation under high temperature conditions, a ratio of 85/15 to 65/35 is preferred.

The number average molecular weight of the isobutylene-based block copolymer (B) is not particularly restricted but preferably is 30,000 to 300,000. In particular, from the viewpoint the gravity deformation possibility under high temperature conditions and from the hot melt workability viewpoint, it is preferably 50,000 to 150,000. As mentioned hereinabove, the number average molecular weight, so referred to herein, is the value on the polystyrene equivalent basis as determined by gel permeation chromatography.

The proportion of the isobutylene-based block copolymer (B) in the resin composition according to the invention is not particularly restricted but preferably is 1 to 30 parts by weight, more preferably 5 to 20 parts by weight, per 100 parts by weight of the isobutylene-based polymer (A). When the proportion of the isobutylene-based block copolymer (B) is smaller, deformation tends to occur due to gravity under high temperature conditions and, when it is excessively high, the composition becomes excessively hard, possibly leading to decreases in adhesion, for example peeling at hot melt sealed sites.

The structure of the isobutylene-based block copolymer (B) is not particularly restricted but may be a block copolymer having a linear, branched or starlike structure, for instance. It may be a diblock, triblock or multiblock copolymer.

Preferred as the isobutylene-based block copolymer (B) are styrene-isobutylene block copolymers, in particular. Further, from the viewpoint of gravity deformation, elasticity and/or strength under high temperature conditions, styrene-isobutylene-styrene triblock copolymers are more preferred.

The method for producing the isobutylene-based polymer (A) is not particularly restricted but any of the known polymerization methods can be used. Among them, an isobutylene-based monomer component is preferably polymerized in the presence of a compound represented by the general formula (1) given below so that a block copolymer with a controlled structure may be obtained.

(CR¹R²X) ₙR³ general formula (1)

[In the above formula, X represents a substituent selected from the group consisting of halogen atoms, alkoxyl groups containing 1 to 6 carbon atoms and acyloxyl groups containing 1 to 6 carbon atoms; R¹, R² and R³ each is a hydrogen atom, an aliphatic hydrocarbon group or an aromatic hydrocarbon group, and R¹, R² and R³ may be the same or different; and n represents a natural number of 1 to 6.]

While the method for producing the isobutylene-based block copolymer (B) is not particularly restricted, either, the method comprising first polymerizing an isobutylene-based monomer component in the presence of a compound represented by the above general formula (1) and then further polymerizing an aromatic vinyl compound-based monomer component is preferred since an isobutylene-based block copolymer with a controlled structure can be obtained by that method.

The halogen atoms mentioned above include chlorine, fluorine, bromine and iodine, among others. The above-mentioned alkoxyl groups containing 1 to 6 carbon atoms are not particularly restricted but include a methoxy group, an ethoxy group, and an n- or iso-propoxy group, for instance. The above-mentioned acyloxyl groups containing 1 to 6 carbon atoms are not particularly restricted but include, among others, an acetyloxy group and a propionyloxy group. The above-mentioned aliphatic hydrocarbon group is not particularly restricted but includes, for example, a methyl group, an ethyl group, and an n- or isopropyl group. The above-mentioned aromatic hydrocarbon group is not particularly restricted but includes, among others, a phenyl group and a methylphenyl group.

The compound represented by the general formula (1) is to serve as an initiator and is considered to form a carbocation in the presence of a Lewis acid, for instance, to provide initiation sites for cationic polymerization. As examples of the compound of general formula (1) which can be used in the practice of the invention, such compounds as enumerated below may be mentioned, among others.
(1-Chloro-1-methylethyl)benzene [C₆H₅C(CH₃)₂Cl],
1,4-bis(1-chloro-1-methylethyl)benzene
[1,4-Cl(CH₃) ₂CC₆H₄C (CH₃)₂Cl],
1,3-bis(1-chloro-1-methylethyl)benzene
[1,3-Cl(CH₃)₂CC₆H₄C(CH₃)₂Cl],
1,3,5-tris(1-chloro-1-methylethyl)benzene
[1,3,5-(ClC(CH₃)₂)₃C₆H₃], and
1,3-bis(1-chloro-1-methylethyl)-5-(tert-butyl)benzene
[1,3-(C(CH₃)₂Cl)₂-5- (C(CH₃)₃)C₆H₃].

Particularly preferred among them are (1-chloro-1-methylethyl)benzene [C₆H₅C(CH₃)₂Cl], bis(1-chloro-1-methylethyl) benzene [C₆H₄(C(CH₃)₂Cl)₂], and tris(1-chloro-1-methylethyl)benzene [(ClC(CH₃)₂)₃C₆H₃]. [(1-Chloro-1-methylethyl)benzene is also known as (α-chloroisopropyl)benzene, (2-chloro-2-propyl)benzene or cumyl chloride, and bis(1-chloro-1-methylethyl)benzene is also known as bis(α-chloroisopropyl)benzene, bis(2-chloro-2-propyl)benzene or dicumyl chloride, and tris(1-chloro-1-methylethyl)benzene is also known as tris(α-chloroisopropyl)benzene, tris(2-chloro-2-propyl)benzene or tricumyl chloride.]

On the occasion of production of the isobutylene-based polymer (A) and isobutylene-based block copolymer (B) by polymerization, the polymerization may be carried out in the presence of a Lewis acid catalyst as well. Such Lewis acid may be any of those which can be used in cationic polymerization. Thus, such metal halides as TiCl₄, TiBr₄, BCl₃, BF₃, BF₃·OEt₂, SnCl₄, SbCl₅, SbF₅, WCl₆, TaCl₅, VCl₅, FeCl₃, ZnBr₂, AlCl₃ and AlBr₃; and organometal halides such as Et₂AlCl and EtAlCl₂ can be suitably used. Among them, TiCl₄, BCl₃ and SnCl₄ are preferred considering their catalytic activity and ready commercial availability. The level of addition of the Lewis acid is not particularly restricted but can be selected considering the polymerization characteristics of the monomer(s) used or the polymerization concentration, among others. Generally, the Lewis acid can be used in an amount of 0.1 to 100 mole equivalents, preferably within the range of 1 to 50 mole equivalents, relative to the compound represented by the general formula (1).

In producing the isobutylene-based polymer (A) and isobutylene-based block copolymer (B) by polymerization, the polymerization may also be carried out in the presence of an electron donor component as well according to need. This electron donor component is considered to be effective in stabilizing the growing carbocation on the occasion of cationic polymerization, and the addition of an electron donor results in the formation of a polymer narrow in molecular weight distribution and controlled in structure. The electron donor component that can be used is not particularly restricted but includes, among others, pyridines, amines, amides, sulfoxides, esters, and metal compounds having a metal atom-bound oxygen atom.

The production of the isobutylene-based polymer (A) and isobutylene-based block copolymer (B) by polymerization can be carried out in the presence of an organic solvent according to need, and any of those organic solvents which will not essentially disturb the cationic polymerization can be used without any particular restriction. Specifically, there may be mentioned halogenated hydrocarbons such as methyl chloride, dichloromethane, chloroform, ethyl chloride, dichloroethane, n-propyl chloride, n-butyl chloride and chlorobenzene; benzene and alkylbenzenes such as toluene, xylene, ethylbenzene, propylbenzene and butylbenzene; straight-chain aliphatic hydrocarbons such as ethane, propane, butane, pentane, hexane, heptane, octane, nonane and decane; branched aliphatic hydrocarbons such as 2-methylpropane, 2-methylbutane, 2,3,3-trimethylpentane and 2,2,5-trimethylhexane; alicyclic hydrocarbons such as cyclohexane, methylcyclohexane and ethylcyclohexane; and paraffin oils derived from petroleum fractions by hydrogenation purification, among others.

These solvents are used either singly or in combination of two or more considering the balance among the polymerization characteristics of the monomer or monomers constituting the isobutylene-based polymer (A) and isobutylene-based block copolymer (B) to be used in accordance with the invention and the solubility of the polymers formed, among others. The amount of the solvent to be used is selected so that the polymer concentration may amount to 1 to 50% by weight, preferably 5 to 35% by weight, considering the viscosity of the polymer solution to be obtained and the ease of removing heat.

In actually carrying out the polymerization, the components are mixed up under cooling, for example at a temperature not lower than -100°C but lower than 0°C. For balancing the energy cost against the stability of polymerization, a particularly preferred temperature range is within the range of -30°C to -80°C. The above-mentioned polymerization reaction may be carried out either in a batchwise manner (batchwise or semibatchwise) or in a continuous manner by continuously feeding the respective components necessary for the polymerization reaction to a polymerization vessel.

The filler (C) is effective in improving the rigidity of the resin composition of the invention and is also effective in improving the shape retainability at temperatures during use and in preventing sagging during hot melt application. The filler (C) to be used is not particularly restricted but may be any of species known in the art. For example, use may be made of at least one member selected from the group consisting of calcium carbonate, magnesium carbonate, fused silica, crystalline silica, diatomaceous earth, clays, talc, mica, kaolin, titanium oxide, zinc oxide, carbon black, bentonite, aluminum hydroxide, magnesium hydroxide, barium sulfate, calcium sulfate and the like. Among these, calcium carbonate and carbon black are preferred, and carbon black, which is effective in rigidity improvement at low addition levels, is particularly preferred.

The level of addition of the filler (C) is not particularly restricted but preferably is 1 to 300 parts by weight, more preferably 50 to 150 parts by weight, per 100 parts by weight of the isobutylene-based polymer (A).

The resin composition according to the invention may further contain a moisture-absorbing compound (D). As the moisture-absorbing compound (D), there may be used zeolite, silica gel and alumina etc., and these may be used singly or two or more of them may be used in combination. Such a moisture-absorbing compound reduces the water vapor permeability of the resin composition according to the invention and can prevent the space sandwiched between glass panels of the double glazing unit from being fogged by moisture. In order to efficiently achieve this condition, the level of addition of the moisture-absorbing compound (D) is preferably 1 to 100 parts by weight per 100 parts by weight the isobutylene-based polymer (A).

The resin composition according to the invention may further contain, as a processing aid, an aromatic vinyl-based thermoplastic elastomer other than (B). As the aromatic vinyl-based thermoplastic elastomer, so referred to herein, there may be mentioned block copolymers composed of a block (s) the constituent monomers of which are an aromatic vinyl compound and a butadiene and/or isoprene block(s), and hydrogenation products derived therefrom. For example, mention may be made of SBS species (styrene-butadiene-styrene block copolymers), SIS species (styrene-isoprene-styrene block copolymers), SEBS species (styrene-(ethylene/butylene)-styrene block copolymers), SEPS species (styrene-(ethylene/propylene)-styrene block copolymers and SEEPS species (styrene-[ethylene-(ethylene/propylene)]-styrene block copolymers), among others. These have moldability-improving effects and can be incorporated at addition levels at which the gas barrier properties will not be adversely affected.

In the resin composition according to the invention, there may further be incorporated one or more of antioxidants, ultraviolet absorbers, light stabilizers, pigments, surfactants, flame retardants and so forth each at an appropriate addition level so long as the physical properties of the composition will not be sacrificed thereby. Such known antiblocking agents, antistatic agents, colorants, inorganic or organic antimicrobial agents and lubricants can also be incorporated.

The method for producing the resin composition according to the invention is not particularly restricted but, for example, use may be made of the method comprising mechanical kneading using a melting vessel equipped with a roll, Banbury mixer, kneader or stirrer or using a single-screw or twin-screw extruder. On that occasion, heating may be made according to need. It is also possible to use the method comprising preparing a uniform solution, followed by solvent removal by distillation.

As for the kneading conditions, the temperature should be not lower than the temperature at which the isobutylene-based block copolymer (B) melts but preferably is not higher than 260°C.

The resin composition of the invention can be further molded according to need using a molding method and molding apparatus generally employed for thermoplastic resin compositions, for example by extrusion molding, injection molding, press molding or blow molding.

The resin composition obtained in the above manner has high levels of gas barrier properties, elasticity and mechanical strength and shows only a slight extent of gravity deformation under high temperature conditions. On the other hand, on the occasion of application to the glass surface, namely when it is supposed that an applicator or coater is used, a shearing force operates and the composition flows with ease and, therefore, the composition can be suitably used as a sealant, in particular as a hot melt sealant for double glazing units, or as a hot melt spacer material for double glazing units

### (Effect of the invention)

The resin composition according to the invention undergoes only a slight extent of gravity deformation under high temperature conditions and is higher in elasticity, mechanical strength and gas barrier properties as compared with the conventional compositions. Thus, the resin composition according to the invention can be suitably used as a sealant required to show high levels of elasticity, mechanical strength, gas barrier properties, and the like, in particular as a hot melt sealant for double glazing units, or as a hot melt spacer material for double glazing units.

### BEST MODE FOR CARRYING OUT THE INVENTION

The following examples illustrate the present invention in further detail. These examples are, however, by no means limitative of the scope of the invention.

### [Contents of the components described in the examples etc.]

PIB1: Polyisobutylene (described in Production Example 1); PIB2: Polyisobutylene (product of BASF, product name: "Oppanol B12");
SIBS1: Styrene-isobutylene-styrene triblock copolymer 1 (described in Production Example 2; molecular weight of 60, 000; styrene block content of 30%);
SIBS2: Styrene-isobutylene-styrene triblock copolymer 2 (described in Production Example 3; molecular weight of 120,000; styrene block content of 30%);
SIBS3: Styrene-isobutylene-styrene triblock copolymer 3 (described in Production Example 4; molecular weight of 120,000; styrene block content of 13%);
SIB: Styrene-isobutylene diblock copolymer (described in Production Example 5);
SEBS: Styrene-(ethylene/butylene)-styrene block copolymer (product of Kraton Japan, product name: "Kraton G1650");
SEEPS: Styrene-[ethylene-(ethylene/propylene)]-styrene block copolymer (product of Kuraray, product name: "Septon 4033");
Calcium carbonate (product of Shiraishi Calcium, product name: Softon 3200");
Carbon black (product of Asahi Carbon, product name: "Asahi Carbon #60HN");
Silica gel (product of Tosoh Silica, product name: "Nipgel CX200").

### [Method of testing for gravity deformation]

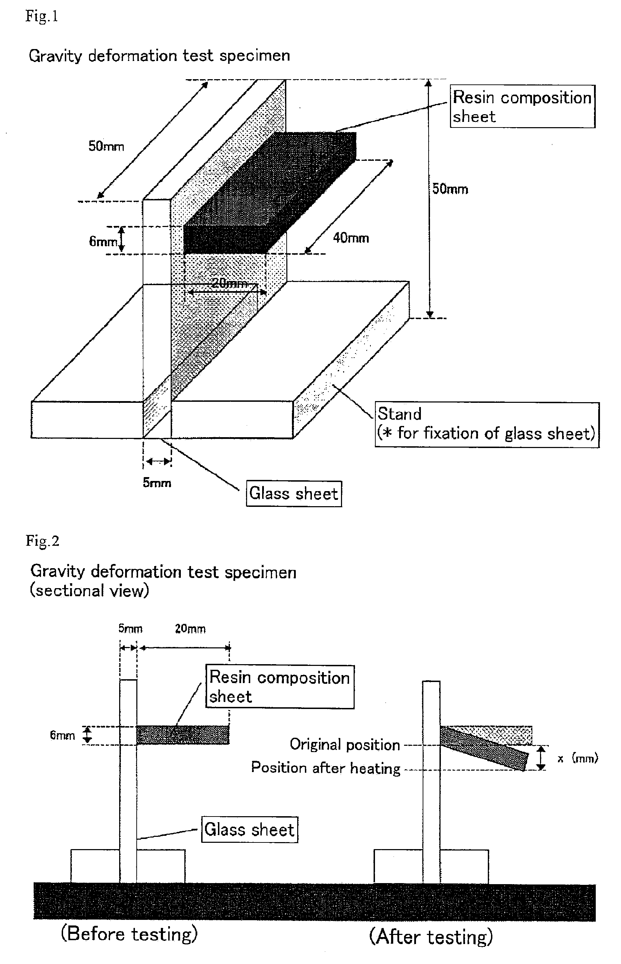

First, each resin composition obtained was molded into sheets (width 20 mm x length 40 mm x thickness 6 mm) using a mold and a press molding machine (temperature set at 180°C). A glass sheet (width 50 mm x length 50 mm x thickness 5 mm) was prepared and each test specimen sheet was caused to perpendicularly adhere to the glass surface, as shown in Fig. 1. The glass sheet with the test specimen sheet adhering thereto was fixed vertically relative to the ground using a stand and then allowed to stand in a hot air drying chamber at 120°C (or 140°C) for 12 hours. After 12 hours of testing, the distance x (mm) of the position of the lower end of the test specimen sheet after heating from the original position was measured, as shown in Fig. 2. The gravity deformation was evaluated based on the distance x (mm) measured after the above heating test according to the following criteria.
Excellent: The distance x (mm) after the above heating test is shorter than 1 mm;
Fair: The distance x (mm) after the above heating test is not shorter than 1 mm but shorter than 3 mm;
Poor: The distance x (mm) after the above heating test is 3 mm or longer.

### [Gas permeability testing]

A 0.9-mm-thick sheet was prepared from the composition obtained by hot pressing under conditions of 180°C. The sheet prepared was subjected to water vapor permeability measurement of the composition at 40°C and at 90% RH according to JIS Z 0208. Excellent: The water vapor permeability value measured is lower than 1 g/m²·day.
Poor: The water vapor permeability value measured is not lower than 1 g/m²·day.

### (Production Example 1) [Production of an isobutylene-based polymer (A)]

A polymerization vessel (2-liter separable flask) was purged with nitrogen and then charged with 173 mL of ethylcyclohexane (molecular sieve-dried) and 519 mL of toluene (molecular sieve-dried) using a syringe. The polymerization vessel was cooled by immersion in a dry ice/methanol bath at -70°C and then connected with a pressure-resisting glass-made liquefied gas collector equipped with a three-way cock and containing 254 mL (2,690 mmol) of isobutylene monomer via a Teflon (registered trademark)-made feeding tube, and the isobutylene monomer was fed to the polymerization vessel under nitrogen pressure. 0.5 g (2.2 mmol) of p-dicumyl chloride and 0.37 g (4.3 mmol) of N,N-dimethylacetamide were added. Then, 8.3 mL (75.5 mmol) of titanium tetrachloride was further added to initiate the polymerization. After the start of polymerization, stirring was continued at the same temperature for 3 hours and then about 40 mL of methanol was added to terminate the reaction.

After distilling off the solvent and so forth from the reaction mixture, the residue was dissolved in hexane, and the solution was washed with two portions of water. Further, a large amount of methanol was added to the hexane solution to precipitate the polymer. The polymer obtained was dried under vacuum at 60°C for 24 hours to give the desired isobutylene-based polymer (PIB1). The isobutylene-based polymer had a number average molecular weight of 70,000.

### (Production Example 2) [Production of SIBS1]

A polymerization vessel (2-liter separable flask) was purged with nitrogen and then charged with 300 mL of n-hexane (molecular sieve-dried) and 432 mL of butyl chloride (molecular sieve-dried) using a syringe. The polymerization vessel was cooled by immersion in a dry ice/methanol bath at -70°C and then connected with a pressure-resisting glass-made liquefied gas collector equipped with a three-way cock and containing 153 mL (1,619 mmol) of isobutylene monomer via a Teflon (registered trademark)-made feeding tube, and the isobutylene monomer was fed to the polymerization vessel under nitrogen pressure. 0.50 g (2.2 mmol) of p-dicumyl chloride and 0.94 g (10.8 mmol) of N,N-dimethylacetamide were added. Then, 6.6 mL (61 mmol) of titanium tetrachloride was further added to initiate the polymerization. After the start of polymerization, stirring was continued at the same temperature for 1.5 hours and then about 1 mL of the polymerization mixture was sampled from the polymerization mixture. Then, a mixed solution composed of 43 g (415 mmol) of styrene monomer, 20 mL of n-hexane and 30 mL of butyl chloride, cooled in advance to -70°C, was added to the polymerization vessel inside. At 45 minutes after addition of the mixed solution, about 40 mL of methanol was added to terminate the reaction.

After distilling off the solvent and so forth from the reaction mixture, the residue was dissolved in toluene, and the solution was washed with two portions of water. Further, a large amount of methanol was added to the toluene solution to precipitate the polymer. The polymer obtained was dried under vacuum at 60°C for 24 hours to give the desired isobutylene-based triblock copolymer (SIBS1). The isobutylene polymer before addition of styrene had a number average molecular weight of 42,000, and the block copolymer after polymerization of styrene had a number average molecular weight of 60,000. The weight ratio between the isobutylene-based polymer block (b2) and the styrene-based polymer block (b1) in the isobutylene-based block copolymer (B) was 70/30. This ratio can be determined by using the ¹H-NMR technique, and the value referred to herein was calculated from the ratio between the aromatic-due peak intensity and the aliphatic-due peak intensity.

### (Production Example 3) [Production of SIBS2]

A polymerization vessel (2-liter separable flask) was purged with nitrogen and then charged with 302 mL of n-hexane (molecular sieve-dried) and 435 mL of butyl chloride (molecular sieve-dried) using a syringe. The polymerization vessel was cooled by immersion in a dry ice/methanol bath at -70°C and then connected with a pressure-resisting glass-made liquefied gas collector equipped with a three-way cock and containing 153 mL (1,619 mmol) of isobutylene monomer via a Teflon (registered trademark)-made feeding tube, and the isobutylene monomer was fed to the polymerization vessel under nitrogen pressure. 0.25 g (1.1 mmol) of p-dicumyl chloride and 0.47 g (5.4 mmol) of N,N-dimethylacetamide were added. Then, 4.2 mL (38 mmol) of titanium tetrachloride was further added to initiate the polymerization. After the start of polymerization, stirring was continued at the same temperature for 1.5 hours and then about 1 mL of the polymerization mixture was sampled from the polymerization mixture. Then, a mixed solution composed of 43 g (415 mmol) of styrene monomer, 20 mL of n-hexane and 30 mL of butyl chloride, cooled in advance to -70°C, was added to the polymerization vessel inside. At 45 minutes after addition of the mixed solution, about 40 mL of methanol was added to terminate the reaction.

After distilling off the solvent and so forth from the reaction mixture, the residue was dissolved in toluene, and the solution was washed with two portions of water. Further, a large amount of methanol was added to the toluene solution to precipitate the polymer. The polymer obtained was dried under vacuum at 60°C for 24 hours to give the desired isobutylene-based triblock copolymer (SIBS2). The isobutylene polymer before addition of styrene had a number average molecular weight of 84,000, and the block copolymer after polymerization of styrene had a number average molecular weight of 120,000. The weight ratio between the isobutylene-based polymer block (b2) and the styrene-based polymer block (b1) in the isobutylene-based block copolymer (B) was 70/30. (This ratio was determined by using the ¹H-NMR technique as mentioned above.)

### (Production Example 4) [Production of SIBS3]

A polymerization vessel (2-liter separable flask) was purged with nitrogen and then charged with 297 mL of n-hexane (molecular sieve-dried) and 427 mL of butyl chloride (molecular sieve-dried) using a syringe. The polymerization vessel was cooled by immersion in a dry ice/methanol bath at -70°C and then connected with a pressure-resisting glass-made liquefied gas collector equipped with a three-way cock and containing 190 mL (2,012 mmol) of isobutylene monomer via a Teflon (registered trademark)-made feeding tube, and the isobutylene monomer was fed to the polymerization vessel under nitrogen pressure. 0.25 g (1.1 mmol) of p-dicumyl chloride and 0.47 g (5.4 mmol) of N,N-dimethylacetamide were added. Then, 4.2 mL (38 mmol) of titanium tetrachloride was further added to initiate the polymerization. After the start of polymerization, stirring was continued at the same temperature for 1.5 hours and then about 1 mL of the polymerization mixture was sampled from the polymerization mixture. Then, a mixed solution composed of 19 g (180 mmol) of styrene monomer, 20 mL of n-hexane and 30 mL of butyl chloride, cooled in advance to -70°C, was added to the polymerization vessel inside. At 45 minutes after addition of the mixed solution, about 40 mL of methanol was added to terminate the reaction.

After distilling off the solvent and so forth from the reaction mixture, the residue was dissolved in toluene, and the solution was washed with two portions of water. Further, a large amount of methanol was added to the toluene solution to precipitate the polymer. The polymer obtained was dried under vacuum at 60°C for 24 hours to give the desired isobutylene-based triblock copolymer (SIBS3). The isobutylene polymer before addition of styrene had a number average molecular weight of 104,000, and the block copolymer after polymerization of styrene had a number average molecular weight of 120,000. The weight ratio between the isobutylene-based polymer block (b2) and the styrene-based polymer block (b1) in the isobutylene-based block copolymer (B) was 87/13. (This ratio was determined by using the ¹H-NMR technique as mentioned above.)

### (Production Example 5) [Production of a styrene-isobutylene diblock copolymer (SIB)]

A polymerization vessel (500-ml separable flask) was purged with nitrogen and then charged with 84.9 mL of n-hexane (molecular sieve-dried) and 122.2 mL of butyl chloride (molecular sieve-dried) using a syringe. The polymerization vessel was cooled by immersion in a dry ice/methanol bath at -70°C and then connected with a pressure-resisting glass-made liquefied gas collector equipped with a three-way cock and containing 78.3 mL (828.8 mmol) of isobutylene monomer via a Teflon (registered trademark)-made feeding tube, and the isobutylene monomer was fed to the polymerization vessel under nitrogen pressure. 0.217 g (1.4 mmol) of cumyl chloride and 0.12 g (1.4 mmol) of N,N-dimethylacetamide were added. Then, 1.54mL (14.0 mmol) of titanium tetrachloride was further added to initiate the polymerization. After the start of polymerization, stirring was continued at the same temperature for 120 minutes and then about 1 mL of the polymerization mixture was sampled from the polymerizationmixture. Then, 9.48 g (91.0 mmol) of styrene monomer was added to the polymerization vessel inside. At 45 minutes after addition of the monomer, a large amount of water was added to terminate the reaction.

The reaction mixture was washed with two portions of water, the solvent fraction was distilled off, and the polymer obtained was dried under vacuum at 60°C for 24 hours to give the desired isobutylene-based diblock copolymer (SIB). It had a number average molecular weight of 48,000.

### (Example 1)

A resin composition was prepared by melt-kneading 90 parts by weight of an isobutylene-based polymer PIB1 obtained in Production Example 1, 10 parts by weight of SIBS1, 40 parts by weight of calcium carbonate (Softon 3200, product of Shiraishi Calcium), 50 parts by weight of carbon black (Asahi Carbon #60HN, product of Asahi Carbon) and 10 parts of silica gel (Nipgel CX200, product of Tosoh Silica) on a Labo Plastomill kneader (product of Toyo Seiki Seisakusho) at a temperature set at 170°C for 10 minutes. This composition was evaluated for various physical characteristics by the methods described above. The results are shown in Table 1.

### (Example 2)

A resin composition was prepared as described in Example 1 except that Oppanol B12 (product of BASF) was used as an isobutylene-based polymer (A). This composition was evaluated for various physical characteristics by the methods described above. The results are shown in Table 1.

### (Examples 3 to 6)

A resin composition was prepared as described in Example 1 except that the species and addition level of the isobutylene-based block copolymer (B) were changed as shown in Table 1. This composition was evaluated for various physical characteristics by the methods described above. The results are shown in Table 1.

### (Comparative Example 1)

A resin composition was prepared as described in Example 1 except that the addition levels of the isobutylene-based polymer (A) and the isobutylene-based block copolymer (B) were changed as shown in Table 1. This composition was evaluated for various physical characteristics by the methods described above. The results are shown in Table 1.

### (Comparative Examples 2 and 3)

A resin composition was prepared as described in Example 1 except that a non-isobutylene-based block copolymer SEBS or SEEPS (referred to as a non-isobutylene-based block copolymer (B) ') was used in lieu of the isobutylene-based block copolymer (B) in Example 1 as shown in Table 1. This composition was evaluated for various physical characteristics by the methods described above. The results are shown in Table 1.

**Table 1**

| Component | Constituent | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| (A) | Isobutylene-based polymer | PIB1 (Production Exampel 1) | 90 | | 95 | 90 | 90 | 70 | 100 | 90 | 90 |
| | | PIB2 (Oppanol B12) | | 90 | | | | | | | |
| (B) | lsobutylene-based block copolymer | SIBS1 (Production Exampel 2) | 10 | 10 | 5 | | | | | | |
| | | SIBS2 (Production Exampel 3) | | | | 10 | | | | | |
| | | SIBS3 (Production Exampel 4) | | | | | 10 | | | | |
| | | SIB (Production Exampel 5) | | | | | | 30 | | | |
| (B)' | Non-isobutylene-based block copolymer | SEBS (Kraton G1650) | | | | | | | | 10 | |
| | | SEEPS (Septon 4033) | | | | | | | | | 10 |
| (C) | Filler | Calcium carbonate (Softon 3200) | 40 | 40 | 40 | 40 | 40 | 40 | 40 | 40 | 40 |
| | | Carbon black (Asahi Carbon #60HN) | 50 | 50 | 50 | 50 | 50 | 50 | 50 | 50 | 50 |
| (D) | Moisture-absorbing compound | Silica gel (Nipgel CX200) | 10 | 10 | 10 | 10 | 10 | 10 | 10 | 10 | 10 |
| Gravity deformation test (120°C) | | | Excellent | Excellent | Excellent | Excellent | Excellent | Excellent | Poor | Excellent | Excellent |
| Gravity deformation test (140°C) | | | Excellent | Excellent | Excellent | Excellent | Excellent | Fair | Poor | Excellent | Excellent |
| Gas permeability | | | Excellent | Excellent | Excellent | Excellent | Excellent | Excellent | Excellent | Poor | Poor |
| Water vapor permeability (g/m²·day) | | | < 0.2 | < 0.2 | < 0.2 | < 0.2 | < 0.2 | < 0.2 | < 0.2 | 1.2 | 1.2 |

In Examples 1 to 6, the sheet specimens hardly showed gravity deformation even under high temperature conditions (120°C) and showed sufficiently low levels of gas permeability and water vapor permeability (good gas barrier properties). On the other hand, the sheet of Comparative Example 1 which contained no isobutylene-based block copolymer showed gravity deformation under high temperature conditions.

In Comparative Examples 2 and 3, in which the styrene-(ethylene/butylene)-styrene block copolymer (SEBS) or styrene-[ethylene-(ethylene/propylene)]-styrene block copolymer (SEEPS) was added, the sheets hardly showed gravity deformation under high temperature conditions but showed decreases in gas barrier properties (increases in gas permeability).

The above results showed that the composition according to the invention is superior in gravity deformation at high temperatures without being compromised in gas barrier properties. This resin composition can be suitably used as a sealant, in particular as a hot melt sealant for double glazing units, and as a hot melt spacer material for double glazing units.

### INDUSTRIAL APPLICABILITY

The resin composition according to the invention can be suitably used as a sealant required to show high levels of elasticity, mechanical strength, gas barrier properties, and the like, in particular as a hot melt sealant for double glazing units, or as a hot melt spacer material for double glazing units.

### BRIEF DESCRIPTION OF THE DRAWINGS

[Fig. 1] This is a schematic representation of the constitution of the test specimen for gravity deformation testing.
[Fig. 2] This is a sectional view of the test specimen shown in Fig. 1.

## Claims

1. A resin composition
which comprises
an isobutylene-based polymer (A),
an isobutylene-based block copolymer (B) comprising a polymer block (b1) the constituent monomer of which is an aromatic vinyl compound and a polymer block (b2) the constituent monomer of which is isobutylene, and
a filler (c).

2. The resin composition according to Claim 1
wherein the isobutylene-based block copolymer (B) has a number average molecular weight of 30,000 to 300,000.

3. The resin composition according to Claim 1 or 2
wherein the weight ratio (b2)/(b1) between the polymer block (b2) and polymer block (b1) in the isobutylene-based block copolymer (B) is 95/5 to 50/50.

4. The resin composition according to any one of Claims 1 to 3
wherein the isobutylene-based block copolymer (B) is a styrene-isobutylene block copolymer.

5. The resin composition according to any one of Claims 1 to 4
wherein the isobutylene-based block copolymer (B) is a styrene-isobutylene-styrene triblock copolymer.

6. The resin composition according to any one of Claims 1 to 5
wherein the filler (C) is at least one species selected from the group consisting of calcium carbonate and carbon black.

7. The resin composition according to any one of Claims 1 to 6
which further comprises a moisture-absorbing compound (D).

8. The resin composition according to Claim 7
wherein the moisture-absorbing compound (D) is at least one species selected from the group consisting of silica gel, alumina and zeolite.

9. The resin composition according to any one of Claims 1 to 8
which further comprises a styrenic thermoplastic elastomer other than the component (B).

10. A sealant
which comprises the resin composition according to any one of Claims 1 to 9.

11. A hot melt sealant for double glazing units
which comprises the resin composition according to any one of Claims 1 to 9.

12. A hot melt spacer for double glazing units
which comprises the resin composition according to any one of Claims 1 to 9.
